# EUROPEAN PATENT SPECIFICATION

(11) **EP 2 878 500 B1**
(45) Date of publication and mention of the grant of the patent: **08.08.2018**
(21) Application number: 14194639.2
(22) Date of filing: 25.11.2014
(51) Int. Cl.: B60T 1/06, B66F 9/075, B60T 13/04

(54) **Parking brake system for forklift and forklift having the same**
Feststellbremssystem für Gabelstapler und Gabelstapler damit
Système de frein de stationnement pour une fourche de chariot élévateur et chariot doté de celui-ci

(30) Priority: 29.11.2013 CN 201310628204; 29.11.2013 CN 201320775882 U
(43) Date of publication of application: 03.06.2015
(73) Proprietor: BYD Company Limited, Shenzhen, Guangdong 518118 (CN)
(72) Inventor: Rao, Shuibing, 518118 Shenzhen (CN); Guo, Qiang, 518 118 Shenzhen (CN)
(74) Representative: Steinbauer, Florian

(56) References cited:
- EP-A1- 0 761 520
- WO-A1-96/12634
- CN-A- 1 428 287

## Description

### FIELD

Embodiments of the present disclosure generally relate to a forklift technology field, and more particularly, to a parking brake system for a forklift and a forklift having the same.

### BACKGROUND

In related art, there are two types of parking brake for a forklift. The first type of parking brake is implemented by using a cam handle, in which a flexible shaft is configured to pull a pull rod therein to generate a mechanical force to brake forklift wheels. However, the cam handle has a complex structure and is difficult to be mounted, particularly when an operator forgets to apply a handbrake of the forklift, an accident is likely to occur, thus resulting in a poor safety. The second type of parking brake is implemented by using a combination of machine and hydraulic pressure. Specifically, at an end of a brake cylinder, energy stored in a spring energy storage device is used to brake the forklift, and an external oil pump is required to provide oil into the other end of the brake cylinder continuously, so as to generate a sufficient oil pressure to overcome the energy stored by the spring energy storage device when the brake is released, i.e., it is required for the external pump to provide oil continuously to implement the brake-release, thus resulting in a huge energy loss which causes problems of diseconomy and being unfriendly to environment.

WO 96/12634 A1 discloses a brake actuator for delivering a brake force through a brake block or brake pad to a wheel or disc to be braked comprising in a housing (1) a service brake arrangement (3, 5). The actuator also comprises a safety brake arrangement (4, 9) including at least one powerful spring (9), acting in the brake application direction, means for tensioning the spring by the reaction force at a service brake application, and mechanical means (11, 12, 13) for locking the spring to the housing in a tension state. These locking means can be released at will for accomplishing a safety brake application.

### SUMMARY

Embodiments of the present disclosure seek to solve at least one of the problems existing in the related art to at least some extent.

A first objective of the present disclosure is to provide a parking brake system for a forklift, which has a simple structure, a reliable brake performance and a low energy consumption.

A second objective of the present disclosure is to provide a forklift having the parking brake system.

In order to achieve above objectives, the invention provides a parking brake system for a forklift, including: a brake cylinder; a piston disposed in the brake cylinder and movable between a brake position and a brake-release position and dividing an interior of the brake cylinder into a first oil chamber and a second oil chamber; an elastic member disposed in the first oil chamber and having a first end contacted with a wall of the first oil chamber opposite to the piston and a second end contacted with the piston; a magnetic member disposed on the piston; and an electromagnetic member configured to cooperate with the magnetic member magnetically, in which when the electromagnetic member is energized, the electromagnetic member cooperates with the magnetic member to generate a magnetic attraction to drive the piston to move from the brake position to the brake-release position, and during a movement of the piston, the elastic member is compressed by the piston; when the electromagnetic member is deenergized, the elastic member drives the piston to move from the brake-release position to the brake position.

With the parking brake system for a forklift according to embodiments of the present disclosure, the brake of the forklift is released by energizing the electromagnetic member to attract the magnetic member disposed on the piston so as to drive the piston to move, and during the movement of the piston, the elastic member is compressed by the piston to store energy. The forklift is braked by deenergizing the electromagnetic member to separate the magnetic member therefrom and releasing the energy stored by the elastic member to drive the magnetic member to move, further to drive the piston to move. Therefore, the parking brake system according to embodiments of the present disclosure has a simple system, a reliable brake performance and a lower energy consumption. Specifically, when the brake of the forklift is needs to be released, it is merely required to energize the electromagnetic member. However, the parking system in the related art implements the brake of the forklift by providing oil to the second oil chamber continuously. Thus, the parking brake system of the present disclosure can save electric energy and has a low energy loss.

Furthermore, the parking brake system for a forklift further includes a control valve including a first port adapted to communicate with an oil box, a second port communicated with the second oil chamber and a third port; and an oil pump having a first end adapted to be communicated with the oil box and a second end communicated with the third port, in which one of the first port and the third port is communicated with the second port.

With the parking brake system for a forklift according to embodiments of the present disclosure, only when the forklift works in an emergent working condition, can the oil pump be started to release the brake of the forklift. The possibility of the emergent working condition to occur is quite small, thus a working time of the oil pump is short. Therefore, a stability and safety of the parking brake system are ensured and the energy loss is reduced.

In some embodiments, the control valve includes an electromagnetic directional valve or a mechanical directional valve.

In some embodiment, the control valve includes an electromagnetic directional valve, when the electromagnetic directional valve is deenergized, and the second port is communicated with the first port, and when the electromagnetic directional valve is energized, the second port is communicated with the third port. Thus, the electric energy is saved and an operation cost of the forklift is further reduced.

In some embodiment, the magnetic member is fixed on a side surface of the piston located within the first oil chamber and configured as a magnet or armature.

In some embodiments, the magnetic member and the piston are formed integrally and made of a magnetic material. Thus, steps assembling the magnetic member with the piston are saved and it is not required to design two parts, thus saving a design cost.

In some embodiments, a positioning column is disposed on the piston and located within the first oil chamber, and the elastic member is a spring fitted over the positioning column. Thus the string can be more stably mounted.

In some embodiments, the electromagnetic member includes an electromagnet, such that a manufacturing cost of the parking brake system for a forklift is further decreased.

Embodiments of a second aspect of the present disclosure further provide forklift, including an accelerator pedal sensor configured to detect an position of the accelerator pedal; a parking brake system described in above embodiments; and a controller connected with the accelerator pedal sensor and the electromagnetic member of the parking brake system and configured to energize and deenergize the electromagnetic member according to the position of the accelerator pedal detected by the accelerator pedal sensor.

With disposing the parking brake system, the accelerator pedal sensor and the controller cooperated with the parking brake system, the forklift according to embodiments of the present disclosure has a simple structure, a reliable brake performance, a high safety and a low energy consumption.

In some embodiments, the controller controls the electromagnetic member of the parking brake system to be energized after the accelerator pedal is triggered. Therefore, the forklift is prevented from slipping when started on a slope, thus further improving the safety of the forklift.

In some embodiments, the forklift further includes a travelling motor sensor connected with the controller, wherein the controller controls the electromagnetic member deenergized according to information detected by the travelling motor sensor.

In some embodiments, the forklift further includes a seat sensor connected with the controller, wherein the controller controls the electromagnetic member deenergized according to information detected by the seat sensor.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a schematic view of a parking brake system for a forklift according to an embodiment of the present disclosure; and
Fig. 2 is a block diagram of a forklift according to an embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the specification, unless specified or limited otherwise, relative terms such as "right", "left", "inner", "outer" as well as derivative thereof should be construed to refer to the orientation as then described or as shown in the drawings under discussion. These relative terms are for convenience of description and do not indicate or imply that the device or element referred to must have a particular orientation and not require that the present disclosure be constructed or operated in a particular orientation, and thus these relative terms should not be construed to limit the present disclosure.

In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of' relates to two or more than two.

In the description of the present disclosure, unless specified or limited otherwise, it should be noted that, terms "mounted," "connected" "coupled" and "fastened" may be understood broadly, such as permanent connection or detachable connection, electronic connection or mechanical connection, direct connection or indirect connection via intermediary, inner communication or interreaction between two elements. These having ordinary skills in the art should understand the specific meanings in the present disclosure according to specific situations.

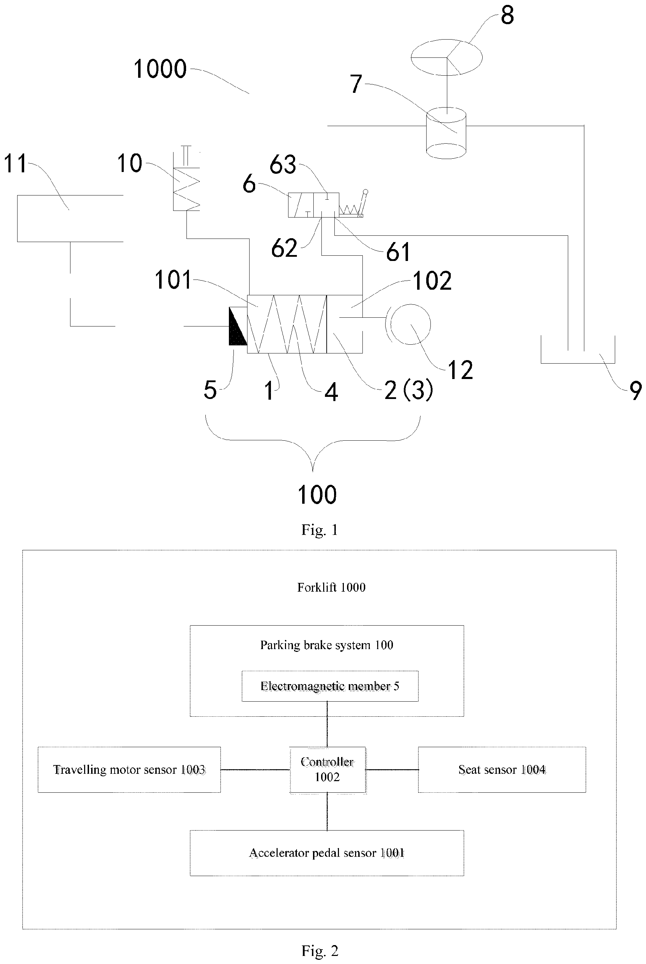

A parking brake system 100 for a forklift 1000 will be described in the following with reference to Fig. 1.

As shown in Fig. 1, the parking brake system 100 for a forklift 1000 include a brake cylinder 1, a piston 2, a magnetic member 3, an elastic member 4 and an electromagnetic member 5.

The piston 2 is disposed in the brake cylinder 1 and is movable between a brake position and a brake-release position, and the piston 2 divides an interior of the brake cylinder 1 into a first oil chamber 101 and a second oil chamber 102. As shown in Fig. 1, in an embodiment of the present disclosure, the first oil chamber 101 is connected with a travelling brake unit 10, when the first oil chamber 101 is compressed, the oil in the first oil chamber 101 can pass through an oil passage of the travelling brake unit 10 back to a corresponding travelling brake oil box.

The magnetic member 3 is disposed on the piston 2. The elastic member 4 is disposed in the first oil chamber 101 and has a first end contacted with a wall of the first oil chamber 101 opposite to the piston 2 and a second end contacted with the piston 2. In other words, the elastic member 4 is disposed between the wall of the first oil chamber 101 opposite to the piston 2 and the piston 2.

The electromagnetic member 5 is configured to cooperate with the magnetic member magnetically.

Specifically, when the electromagnetic member 5 is energized, the electromagnetic member 5 cooperates with the magnetic member 3 to generate a magnetic attraction to drive the piston 2 to move from the brake position to the brake-release position, and during a movement of the piston 2, the elastic member 4 is compressed by the piston 2 to store energy. When the electromagnetic member 5 is deenergized, the elastic member 4 releases the stored energy to drive the piston 2 to move from the brake-release position to the brake position.

It can be understood that a first brake disc is disposed at an end of the piston 2 and a second brake disc fitted with the first brake disc is disposed on a forklift wheel 12 of the forklift 1000. When the piston 2 is in the brake position, the first brake disc is engaged with the second brake disc to stop a movement of the forklift 1000, i.e., the forklift is in a parking state; when the piston 2 is in the brake-release position, the first brake disc separates from the second brake disc to allow the movement of the forklift 1000. The travelling brake unit 10, the travelling brake oil box and the oil passage of the travelling brake unit 10 are known by those skilled persons in the related art and are omitted herein.

When it is required to release the brake of the forklift 1000, the electromagnetic member 5 is energized to generate the magnetic attraction which can attract the magnetic member 3 to move, and then drive the piston 2 to move towards to the electromagnetic member 5. In other words, the magnetic member 3 is attracted by the electromagnetic member 5 to make the piston 2 to move from the brake position to the brake-release position. During this movement of the piston 2, the oil in the first oil chamber 101 is pressed back into the travelling brake oil box and the elastic member 4 is compressed to store energy.

When the piston 2 arrives at the brake-release position, the forklift 1000 can be driven to move. For example, in an embodiment of the present disclosure, the forklift 1000 may be an electronic forklift 1000 which can be driven by a travelling motor.

When it is required to brake the forklift 1000, the electromagnetic member 5 is deenergized, and the magnetic attraction between the electromagnetic member 5 and the magnetic member 3 disappears, and the elastic member 4 releases the stored energy to drive the piston 2 move from the brake-release position to the brake position. During this movement of the piston 2, the oil in the second oil box 102 is compressed back into an oil box 9. When the piston 2 arrives at the brake position, the parking brake of the forklift is implemented.

With the parking brake system 100 for the forklift 1000, the brake of the forklift 1000 is released by energizing the electromagnetic member 5 to attract the magnetic member 3 disposed on the piston 2 so as to drive the piston to move, and during the movement of the piston, the elastic member 4 is compressed by the piston 2 to store energy. The forklift 1000 is braked by deenergizing the electromagnetic member 5 to separate the magnetic member 3 therefrom and releasing the energy stored by the elastic member 4 to drive the magnetic member 3 to move, further to drive the piston 2 to move. Therefore, the parking brake system 100 for the forklift 1000 according to embodiments of the present disclosure has a simple system, a reliable brake performance and a low energy consumption. Specifically, when the brake of the forklift 1000 needs to be released, it is merely required to energize the electromagnetic member 5. However, the parking system in the related art implements the brake of the forklift by providing oil to the second oil chamber 102 continuously. Thus, the parking brake system 100 of the present disclosure can save electric energy and has a low energy loss.

As shown in Fig. 1, the magnetic member 3 may be fixed on a side surface of the piston 2 located within the first oil chamber 101. Alternately, the magnetic member 3 may be configured as a magnet or armature so as to cooperate with the electromagnetic member 5 to generate the magnetic attraction, when the electromagnetic member 5 is energized.

In an embodiment of the present disclosure as shown in Fig. 1, the magnetic member 3 and the piston 2 may be formed integrally and made of a magnetic material. Therefore, assembling processes between the magnetic member 3 and the piston 2 can be saved and it is not required to design two parts, thus saving a design cost. Certainly, when the magnetic member 3 and the piston 2 are formed integrally, only the side surface of the piston 2 located within the first oil chamber 101 are needed to be made of the magnetic material, thus saving the magnetic material and reducing a manufacturing cost. Also, a quantity of the magnetic material may be determined by a desired brake force. In other words, when the electromagnetic member 5 is energized, the magnetic attraction generated by the magnetic member 3 and the electromagnetic member 5 can meet a requirement of the parking brake of the forklift 1000.

In other embodiments of the present disclosure, a positioning column (not shown) is disposed on the piston 2 and located within the first oil chamber 101. Alternatively, the elastic member 4 may be a spring and fitted over the positioning column, thus ensuring an installation stability of the elastic member 4.

In an embodiment of the present disclosure, the electromagnetic member 5 may be an electromagnet, thus further reducing the manufacturing cost of the parking brake system 100 for the forklift 1000.

In an embodiment of the present disclosure as shown in Fig. 1, in order to release the brake of forklift 1000 in an emergent working condition, such as an electric power of the parking brake system 100 is too low or the parking brake system 100 is broken-down, which causes the brake of the forklift 1000 is unable to be released. Thus, the parking brake system 100 for the forklift 1000 further includes a control valve 6 and an oil pump 7.

The control valve 6 includes a first port 61, a second port 62 and a third port 63. The first port 61 is adapted to communicate with the oil box 9, and the second port 62 is communicated with the second oil chamber 102. The oil pump 7 has a first end adapted to be communicated with the oil box 9 and a second end communicated with the third port 63. One of the first port 61 and the third port 63 is communicated with the second port 62. Terms of " the port" and "the third port" should be widely understood, i.e., "the port" is not open all the time, but keeps open when the control valve 6 is operated in a certain working condition. Likewise, "the third port" is not closed all the time, but keeps close when the control valve 6 is operated in a certain working condition.

When a system voltage of the parking brake system 100 is too low, or the parking brake system 100 is broken-down, the forklift is in a lock state. In other words, the forklift 1000 is stuck in a brake state cannot be released. At this time, the oil pump 7 can be started and the third port 63 of the control valve 6 can be controlled to communicate with the second port 62 of the control valve 6. The oil pumped out of the oil box 9 by the oil pump 7 passes through the third port 63 and the second port 62 of the control valve 6 in turn, then flows into the second oil chamber 102 of the brake cylinder 1. Due to an action of an oil pressure in the second oil chamber 102, the piston 2 in the brake cylinder 1 is moved from the brake position to the brake-release position until the brake of the forklift 1000 is reached. By this time, the forklift 1000 can be moved by a manual labor.

When the parking brake system 100 is worked in a normal working condition (i.e. the brake of the forklift 1000 can be released by deenergizing the electromagnetic member 5 and releasing the energy stored by the elastic member 4), the oil pump 7 does not work, and the first port 61 is communicated with the second port 62 of the control valve 6, and thus when the piston 2 is moved from the brake-release position to the brake position, the oil in the second oil chamber 102 can be pumped back into the oil box 9.

In other words, with the parking brake system 100 for the forklift 1000 according to embodiments of the present disclosure, only when the forklift 1000 is worked in the emergent working condition, can the oil pump 7 be started to release the brake of the forklift 1000. It can be understood that the emergent working condition has a little probability to occur, and thus a working time of the oil pump 7 is short, such that a stability and safety of the parking brake system 100 are ensured and the energy loss is reduced.

In an embodiment of the present disclosure, the control valve 6 may be an electromagnetic directional valve or a mechanical directional valve. As shown in Fig. 1, the control valve 6 is a two-position three-way mechanical directional valve. When the forklift 1000 is worked in the emergent working condition, an operator can place the mechanical directional valve in a left position manually, i.e., the control valve 6 is in a position where the third port 63 is communicated with the second port 62.

In an embodiment of the present disclosure, the control valve 6 may be the mechanical directional valve. When the mechanical directional valve is deenergized, the first port 61 is communicated with the second port 62; when the mechanical directional valve is energized, the second port 62 is communicated with the third port 63. In other words, when the forklift 1000 is in the normal working condition, the mechanical directional valve is deenergized; when the forklift 1000 is in the emergent working condition, the mechanical directional valve is energized. In this way, the electric energy is saved and an operating cost of the forklift 1000 can be further reduced.

In an embodiment of the present disclosure, in order to further reduce the manufacturing cost of the parking brake system 100 and make full use of current parts of the forklift 1000, the oil pump 7 may be a metering pump of a hydraulic steering gear of the forklift 1000. The hydraulic steering gear may include a steering oil cylinder, a steering piston disposed within the steering oil cylinder and dividing an interior of the steering oil cylinder into first and second oil chambers, a steering valve and the metering pump.

When it is required for the forklift 1000 to turn left, a steering wheel 8 of the forklift 1000 is rotated to place the steering valve in a first position, in which high pressure oil enters the first oil chamber after passing through the metering pump, and pushes the steering piston to move so as to turn the forklift 1000 left.

When it is required for the forklift 1000 to turn right, the steering wheel 8 of the forklift 1000 is rotated to place the steering valve in a second position, in which the high pressure oil enters the second oil chamber after passing through the metering pump, and pushes the steering piston to move so as to turn the forklift 1000 right.

In an embodiment of the present disclosure, the third port 63 of the control valve 6 may be connected between the metering pump and the first oil chamber via the oil passage. In another embodiment of the present disclosure, the third port 63 of the control valve 6 may be connected between the metering pump and the second oil chamber via the oil passage. It can be understood that the metering pump can meter a quantity of oil entering the first chamber or the second oil chamber during a steering of the forklift 1000.

When the forklift 1000 is in the emergent working condition, the brake of the forklift 1000 can be released by rotating the steering wheel 8 to control the metering pump to pump the high pressure oil into the second oil chamber 102 of the brake cylinder 1 via the control valve 6.

The structure and working principle of the hydraulic steering gear are known by those skilled persons in the related art and are omitted herein.

Embodiments of the present disclosure further provide a forklift 1000. The forklift 1000 includes an accelerator pedal sensor 1001, a parking brake system 100 and a controller 1002. The accelerator pedal sensor 1001 is configured to detect a position of the accelerator pedal. The parking brake system 100 is the parking brake system 100 described in above embodiments of the present disclosure. The controller 1002 is connected with the accelerator pedal sensor 1001 and the electromagnetic member 5 of the parking brake system 100 respectively.

The accelerator pedal sensor 1001 detects if the position of the accelerator pedal is changed, in other words, detects if the accelerator pedal is triggered to change the position thereof or not. The controller 1002 controls the electromagnetic member 5 to be energized or deenergized so as to brake the forklift 1000 or release the brake of the forklift 1000 according to the current position of the accelerator pedal detected by the accelerator pedal sensor 1001.

In an embodiment of the present disclosure, the controller 1002 controls the electromagnetic member 5 of the parking brake system 100 to be energized after the accelerator pedal is triggered, i.e. the accelerator pedal is stepped.

In other words, only if the accelerator pedal is triggered, can the brake of the forklift 1000 be released, i.e., after the accelerator pedal is stepped to a certain position, the brake of the forklift 1000 can be released, and then the forklift 1000 can be driven. Thus, the forklift 1000 can be prevented from slipping when parking on a slope, and the safety of the forklift 1000 can be further improved.

Accordingly, with the forklift 1000 according to embodiments of the present disclosure, by disposing the parking brake system 100, the accelerator pedal sensor 1001 and the controller 1002 cooperated with the parking brake system 100, the forklift 1000 has a simple structure, a reliable brake performance, a high safety and a low energy consumption.

In other embodiments of the present disclosure, the forklift 1000 further includes a travelling motor sensor 1003. The travelling motor sensor 1003 is connected with the controller 1002. It can be understood that the travelling motor can drive the forklift to move. The controller 1002 controls the electromagnetic member 5 to be deenergized according to information (such as whether the travelling motor is operated and a stopping period of the travelling motor) detected by the travelling motor sensor 1003,then the forklift 1000 can be braked.

For example, in an embodiment of the present disclosure, when the travelling motor sensor 1003 detects that the travelling motor has been stopped for 10 to 15 seconds, i.e., the forklift 1000 has been in a static state for 10 to 15 seconds, the controller 1002 controls the electromagnetic member 5 to be deenergized so as to brake the forklift 1000, thus further saving energy sources. Certainly, "10 to 15 seconds" is just one of examples, and the static period of the travelling motor serving as a time condition of deenergizing the electromagnetic member 5 may be adjustable according to a practical situation.

In other embodiments of the present disclosure, the forklift 1000 further includes a seat sensor 1004. The seat sensor 1004 is connected with the controller 1002. The controller 1002 controls the electromagnetic member 5 to be deenergized according to information (such as whether a driver leaves the seat and a leaving time of the driver from the seat) detected by the seat sensor 1004, then the forklift 1000 can be braked.

For example, in an embodiment of the present disclosure, when the seat sensor 1004 detects that the driver has left the seat for 10 to 15 seconds, the controller 1002 control the electromagnetic member 5 to be deenergized so as to brake the forklift 1000, thus further saving energy sources and improving the safety of the forklift 1000. Certainly, "10 to 15 seconds" is just one of examples, and the period after the driver leaves the seat serving as a time condition of deenergizing the electromagnetic member 5 may be adjustable according to a practical situation.

Other components of the forklift 1000 such as a forklift body and the forklift wheel 12 are known by those skilled persons in the related art and are omitted herein.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled persons in the art that the above embodiments cannot be construed to limit the present disclosure, and changes, alternatives, and modifications can be made in the embodiments without departing from the scope of protection as defined by the appended claims.

## Claims

1. A parking brake system for a forklift, comprising:
a brake cylinder (1);
a piston (2) disposed in the brake cylinder (1) and movable between a brake position and a brake-release position and dividing an interior of the brake cylinder (1) into a first oil chamber (101) and a second oil chamber (102);
an elastic member (4) disposed in the first oil chamber (101) and having a first end contacted with a wall of the first oil chamber (101) opposite to the piston (2) and a second end contacted with the piston (2);
a magnetic member (3) disposed on the piston (2); and
an electromagnetic member (5) configured to cooperate with the magnetic member (3) magnetically,
wherein when the electromagnetic member (5) is energized, the electromagnetic member (5) cooperates with the magnetic member (3) to generate a magnetic attraction to drive the piston (2) to move from the brake position to the brake-release position, and during a movement of the piston (2), the elastic member (4) is compressed by the piston (2); when the electromagnetic member (5) is deenergized, the elastic member (4) drives the piston (2) to move from the brake-release position to the brake position.

2. The system according to claim1, further comprising:
a control valve (6) comprising a first port (61) adapted to communicate with an oil box (9), a second port (62) communicated with the second oil chamber (102) and a third port (63); and
an oil pump (7) having a first end adapted to be communicated with the oil box (9) and a second end communicated with the third port (63),
wherein one of the first port (61) and the third port (63) is communicated with the second port (62).

3. The system according to claim 2, wherein the control valve (6) comprises an electromagnetic directional valve or a mechanical directional valve.

4. The system according to claim 2, wherein the control valve (6) comprises an electromagnetic directional valve, when the electromagnetic directional valve is deenergized, the second port (62) is communicated with the first port (61), and when the electromagnetic directional valve is energized, the second port (62) is communicated with the third port (63).

5. The system according to any one of claims 1-4, wherein the magnetic member (3) is fixed on a side surface of the piston (2) located within the first oil chamber (101) and configured as a magnet or armature.

6. The system according to any one of claims 1-4, wherein the magnetic member (3) and the piston (2) are formed integrally and made of a magnetic material.

7. The system according to any one of claims 1-6, wherein a positioning column is disposed on the piston (2) and located within the first oil chamber (101), and the elastic member (4) is a spring fitted over the positioning column.

8. The system according to claim any one of claims 1-7, wherein the electromagnetic member comprises (5) an electromagnet.

9. A forklift, comprising:
an accelerator pedal sensor (1001) configured to detect a position of the accelerator pedal;
a parking brake system according to any one of claims 1-8; and
a controller (1002) connected with the accelerator pedal sensor (1001) and the electromagnetic member (5) of the parking brake system and configured to energize and deenergize the electromagnetic member (5) according to the position of the accelerator pedal detected by the accelerator pedal sensor (1001).

10. The forklift according to claim 9, wherein the controller (1002) controls the electromagnetic member (5) of the parking brake system to be energized after the accelerator pedal is triggered.

11. The forklift according to claim 9 or 10, further comprising a travelling motor sensor (1003) connected with the controller (1002), wherein the controller (1002) controls the electromagnetic member (5) to be deenergized according to information detected by the travelling motor sensor (1003).

12. The forklift according to any one of claims 9-11, further comprising a seat sensor (1004) connected with the controller (1002), wherein the controller (1002) controls the electromagnetic member (5) to be deenergized according to information detected by the seat sensor (1004).

## Patentansprüche

1. Feststellbremssystem für einen Gabelstapler, das Folgendes enthält:
einen Bremszylinder (1);
einen Kolben (2), der in dem Bremszylinder (1) angeordnet und, zwischen einer Bremsstellung und einer Stellung bei gelöster Bremse beweglich ist und einen Innenraum des Bremszylinders (1) in eine erste Ölkammer (101) und eine zweite Ölkammer (102) unterteilt;
ein elastisches Element (4), das in der ersten Ölkammer (101) angeordnet ist und ein erstes Ende in Kontakt mit einer Wand der ersten Ölkammer (101) gegenüber dem Kolben (2) und ein zweites Ende in Kontakt mit dem Kolben (2) besitzt;
ein magnetisches Element (3), das an dem Kolben (2) angeordnet ist; und
ein elektromagnetisches Element (5), das konfiguriert ist, mit dem magnetischen Element (3) magnetisch zusammenzuwirken,
wobei dann, wenn das elektromagnetische Element (5) eingeschaltet wird, das elektromagnetische Element (5) mit dem magnetischen Element (3) zusammenwirkt, um eine magnetische Anziehung zu erzeugen, um den Kolben (2) anzutreiben, sich aus der Bremsstellung in die Stellung bei gelöster Bremse zu bewegen, und während einer Bewegung des Kolbens (2) das elastische Element (4) durch den Kolben (2) komprimiert wird; und dann, wenn das elektromagnetische Element (5) ausgeschaltet wird, das elastische Element (4) den Kolben (2) antreibt, sich aus der Stellung bei gelöster Bremse in die Bremsstellung zu bewegen.

2. System nach Anspruch 1, das ferner Folgendes enthält:
ein Steuerventil (6), das einen ersten Anschluss (61), der ausgelegt ist, mit einem Ölkasten (9) in Verbindung zu stehen, einen zweiten Anschluss (62), der mit der zweiten Ölkammer (102) verbunden ist, und einen dritten Anschluss (63) aufweist; und
eine Ölpumpe (7), die ein erstes Ende, das ausgelegt ist, mit dem Ölkasten (9) verbunden zu sein, und ein zweites Ende, das mit dem dritten Anschluss (63) verbunden ist, besitzt,
wobei der erste Anschluss (61) oder der dritte Anschluss (63) mit dem zweiten Anschluss (62) verbunden ist.

3. System nach Anspruch 2, wobei das Steuerventil (6) ein elektromagnetisches Richtungsventil oder ein mechanisches Richtungsventil enthält.

4. System nach Anspruch 2, wobei das Steuerventil (6) ein elektromagnetisches Richtungsventil enthält, wobei dann, wenn das elektromagnetische Richtungsventil ausgeschaltet wird, der zweite Anschluss (62) mit dem ersten Anschluss (61) verbunden ist, und dann, wenn das elektromagnetische Richtungsventil eingeschaltet wird, der zweite Anschluss (62) mit dem dritten Anschluss (63) verbunden wird.

5. System nach einem der Ansprüche 1-4, wobei das magnetische Element (3) an einer Seitenfläche des Kolbens (2), der sich in der ersten Ölkammer (101) befindet, befestigt ist und als ein Magnet oder ein Anker konfiguriert ist.

6. System nach einem der Ansprüche 1-4, wobei das magnetische Element (3) und der Kolben (2) einteilig ausgebildet und aus einem magnetischen Material hergestellt sind.

7. System nach einem der Ansprüche 1-6, wobei eine Positionierungssäule auf dem Kolben (2) angeordnet ist und sich in der ersten Ölkammer (101) befindet und das elastische Element (4) eine Feder ist, die auf die Positionierungssäule aufgesetzt ist.

8. System nach einem der Ansprüche 1-7, wobei das elektromagnetische Element einen Elektromagneten enthält (5).

9. Gabelstapler, der Folgendes enthält:
einen Fahrpedalsensor (1001), der konfiguriert ist, eine Stellung des Fahrpedals zu detektieren;
ein Feststellbremssystem nach einem der Ansprüche 1-8; und
eine Steuereinheit (1002), die mit dem Fahrpedalsensor (1001) und dem elektromagnetischen Element (5) des Feststellbremssystems verbunden ist und konfiguriert ist, das elektromagnetische Element (5) entsprechend der Stellung des Fahrpedals, die durch den Fahrpedalsensor (1001) detektiert wird, ein- und auszuschalten.

10. Gabelstapler nach Anspruch 9, wobei die Steuereinheit (1002) das elektromagnetische Element (5) des Feststellbremssystems derart steuert, dass es eingeschaltet wird, nachdem das Fahrpedal ausgelöst worden ist.

11. Gabelstapler nach Anspruch 9 oder 10, der ferner einen Fahrmotorsensor (1003), der mit der Steuereinheit (1002) verbunden ist, enthält, wobei die Steuereinheit (1002) das elektromagnetische Element (5) derart steuert, dass es entsprechend den durch den Fahrmotorsensor (1003) detektierten Informationen ausgeschaltet wird.

12. Gabelstapler nach einem der Ansprüche 9 bis 11, der ferner einen Sitzsensor (1004) enthält, der mit der Steuereinheit (1002) verbunden ist, wobei die Steuereinheit (1002) das elektromagnetische Element (5) derart steuert, dass es entsprechend den Informationen, die durch den Sitzsensor (1004) detektiert werden, ausgeschaltet wird.

## Revendications

1. Système de frein de stationnement pour un chariot élévateur à fourche, comportant :
un cylindre de frein (1) ;
un piston (2) disposé dans le cylindre de frein (1) et mobile entre une position de freinage et une position de desserrage du frein et divisant un intérieur du cylindre de frein (1) en une première chambre d'huile (101) et une seconde chambre d'huile (102) ;
un élément élastique (4) disposé dans la première chambre d'huile (101) et ayant une première extrémité en contact avec une paroi de la première chambre d'huile (101) opposée au piston (2) et une seconde extrémité en contact avec le piston (2) ;
un élément magnétique (3) disposé sur le piston (2) ; et
un élément électromagnétique (5) configuré pour coopérer magnétiquement avec l'élément magnétique (3),
dans lequel lorsque l'élément électromagnétique (5) est excité, l'élément électromagnétique (5) coopère avec l'élément magnétique (3) pour générer une attraction magnétique pour entraîner le piston (2) pour passer de la position de freinage à la position de desserrage du frein, et pendant un mouvement du piston (2), l'élément élastique (4) est comprimé par le piston (2) ; lorsque l'élément électromagnétique (5) est désexcité, l'élément élastique (4) entraîne le piston (2) pour passer de la position de desserrage du frein à la position de freinage.

2. Système selon la revendication 1, comportant en outre :
une soupape de commande (6) comportant un premier orifice (61) adapté pour communiquer avec un carter d'huile (9), un deuxième orifice (62) en communication avec la seconde chambre d'huile (102) et un troisième orifice (63) ; et
une pompe à huile (7) ayant une première extrémité adaptée pour être en communication avec le carter d'huile (9) et une seconde extrémité en communication avec le troisième orifice (63),
dans lequel un orifice parmi le premier orifice (61) et le troisième orifice (63) est en communication avec le deuxième orifice (62).

3. Système selon la revendication 2, dans lequel la soupape de commande (6) comporte un distributeur électromagnétique ou un distributeur mécanique.

4. Système selon la revendication 2, dans lequel la soupape de commande (6) comporte un distributeur électromagnétique, lorsque le distributeur électromagnétique est désexcité, le deuxième orifice (62) est en communication avec le premier orifice (61), et lorsque le distributeur électromagnétique est excité, le deuxième orifice (62) est en communication avec le troisième orifice (63).

5. Système selon l'une quelconque des revendications 1 à 4, dans lequel l'élément magnétique (3) est fixé sur une surface latérale du piston (2) située à l'intérieur de la première chambre d'huile (101) et configurée comme un aimant ou une armature.

6. Système selon l'une quelconque des revendications 1 à 4, dans lequel l'élément magnétique (3) et le piston (2) sont formés d'un seul tenant et constitués d'un matériau magnétique.

7. Système selon l'une quelconque des revendications 1 à 6, dans lequel une colonne de positionnement est disposée sur le piston (2) et située à l'intérieur de la première chambre d'huile (101), et l'élément élastique (4) est un ressort adapté sur la colonne de positionnement.

8. Système selon l'une quelconque des revendications 1 à 7, dans lequel l'élément électromagnétique comporte un électro-aimant (5).

9. Chariot élévateur à fourche comportant :
un capteur de pédale d'accélérateur (1001) configuré pour détecter une position de la pédale d'accélérateur ;
un système de frein de stationnement selon l'une quelconque des revendications 1 à 8 ; et
un contrôleur (1002) relié au capteur de pédale d'accélérateur (1001) et à l'élément électromagnétique (5) du système de frein de stationnement et configuré pour exciter et désexciter l'élément électromagnétique (5) en fonction de la position de la pédale d'accélérateur détectée par le capteur de pédale d'accélérateur (1001).

10. Chariot élévateur à fourche selon la revendication 9, dans lequel le contrôleur (1002) commande l'excitation de l'élément électromagnétique (5) du système de frein de stationnement après le déclenchement de la pédale d'accélérateur.

11. Chariot élévateur à fourche selon la revendication 9 ou 10, comportant en outre un capteur de moteur de déplacement (1003) relié au contrôleur (1002), dans lequel le contrôleur (1002) commande la désexcitation de l'élément électromagnétique (5) en fonction d'informations détectées par le capteur de moteur de déplacement (1003).

12. Chariot élévateur à fourche selon l'une quelconque des revendications 9 à 11, comportant en outre un capteur de siège (1004) relié au contrôleur (1002), dans lequel le contrôleur (1002) commande la désexcitation de l'élément électromagnétique (5) en fonction d'informations détectées par le capteur de siège (1004).
